# EUROPÄISCHE PATENTSCHRIFT

(11) **EP 0 960 008 B1**
(45) Veröffentlichungstag und Bekanntmachung des Hinweises auf die Patenterteilung: **08.01.2003**
(21) Anmeldenummer: 98905394.7
(22) Anmeldetag: 04.02.1998
(51) Int. Cl.: B29B 7/74, B01F 5/04

(54) **VERFAHREN UND VORRICHTUNG ZUR HERSTELLUNG FÜLLSTOFFHALTIGER POLYURETHANE**
METHOD AND DEVICE FOR PRODUCING POLYURETHANES CONTAINING FILLING MATERIALS
PROCEDE ET DISPOSITIF PERMETTANT DE PRODUIRE DU POLYURETHANNE CONTENANT DES MATIERES DE REMPLISSAGE

(30) Priorität: 17.02.1997 DE 19706030
(43) Veröffentlichungstag der Anmeldung: 01.12.1999
(73) Patentinhaber: BAYER AG, 51368 Leverkusen (DE)
(72) Erfinder: FRIEDERICHS, Wolfgang, D-50933 Köln (DE); KÜNZEL, Uwe, D-51377 Leverkusen (DE); KRIPPL, Kurt, D-40789 Monheim (DE); SCHULTE, Klaus, D-51429 Bergisch Gladbach (DE)
(86) Internationale Anmeldenummer: EP9800582
(87) Internationale Veröffentlichungsnummer: WO98035803

(56) Entgegenhaltungen:
- EP-A- 0 316 604
- EP-A- 0 337 228
- EP-A- 0 431 388
- EP-A- 0 554 718
- EP-A- 0 554 719
- DE-A- 2 438 307
- DE-A- 3 507 202
- US-A- 2 764 565
- US-A- 3 031 271
- US-A- 3 574 644
- US-A- 5 521 224
- US-A- 5 547 276
- SAECHTLING: "Kunststoff Taschenbuch 26. Ausgabe" , CARL HANSER VERLAG , MÜNCHEN XP002063211 siehe Seite 286 - Seite 297

## Beschreibung

Die Herstellung füllstoffhaltiger Polyurethane erfolgt im allgemeinen so, daß die Komponenten der Polyisocyanat-Polyadditionsmischung und die Füllstoffe einem Rührwerksmischkopf zugeführt werden, dort vermischt werden, anschließend in die offene oder geschlossene Form oder in die aus einer Doppeltransportbandanlage gebildete kontinuierlich bewegte Form eingefüllt werden, wobei die Reaktivmischung gegebenenfalls nach Schließen der Form aushärtet und der Formkörper anschließend entformt wird. Dabei kann der Füllstoff mit der Polyolkomponente vorvermischt werden. Es hat auch Vorschläge gegeben, die flüssigen Komponenten der Polyisocyanat-Polyadditionsreaktionsmischung in einem Gegenstrom-Injektionsmischkopf vorzuvermischen und anschließend in einem Friktionsmischer die Füllstoffe mit der Reaktivmischung zu vermischen.

Je nach Eigenschaften des zu verwendenden Feststoffs können nach diesen Verfahren eine Reihe von Problemen auftreten. Grobkörnige Füllstoffe mit einer Teilchengröße von z.B. mehr als 0,5 mm oder mechanisch empfindliche Füllstoffe, wie z.B. verkapselte Füllstoffe, können in den oben beschriebenen Rühraggregaten, wie Rührwerksmischköpfen oder Friktionsmischern, aufgrund der hohen Scherkräfte mechanisch zerstört werden. Zur Sedimentation neigende Füllstoffe können sich nach dem Einmischen in eine der Reaktionskomponenten bereits bei kurzen Produktionsstillständen in den Zuleitungen absetzen. Sie neigen außerdem dazu, in der reagierenden Polyisocyanat-Polyadditionsmischung zu sedimentieren und sich im unteren Teil der Form anzusammeln.

Beispielsweise gibt es eine Reihe von Vorschlägen, expandierbaren Graphit zur Flammfestausrüstung von Polyurethanen, insbesondere Polyurethanschaum, einzusetzen; siehe z.B. US-A 3 574 644, DE-A 24 28 307, EP-A 192 888 und EP-A 337 228.

Als Blähgraphit kommen beispielsweise bekannte Einlagerungsverbindungen von SOₓ, NOₓ, Halogen und/oder starken Säuren in Graphit in Frage. Diese werden auch als Graphitsalze bezeichnet. Bevorzugt sind Blähgraphite, die bei Temperaturen von beispielsweise 120 bis 350°C unter Aufblähen SO₂, SO₃, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Derartige Blähgraphite sind im Handel erhältlich.

Bezogen auf das anwendungsfertige flammwidrige Dämmelement können beispielsweise 1 bis 50 Gew.-% Blähgraphit darin enthalten sein. Vorzugsweise liegt dieser Blähgraphitgehalt bei 2 bis 30 Gew.-%, insbesondere bei 2 bis 20 Gew.-%. Die Wirkung des Blähgraphit als Flammschutzmittel ist an die Größe der Graphitteilchen gebunden. Während des Einarbeitungsprozesses in ein Bindemittel zermahlene Blähgraphitteilchen tragen nur noch sehr eingeschränkt zur Flammfestausrüstung bei. Übliche Verfahren zur Einarbeitung von Füllstoffen in Polyurethan-Reaktivmischungen führen zu einer erheblichen Teilchengrößenverkleinerung, die der Flammfestausrüstung abträglich ist. Insbesondere bei der Herstellung von Blähgraphit enthaltendem Polyurethan-Schaum wird weiterhin eine starke Sedimentation des Blähgraphits durch den noch nicht ausgehärteten Schaum beobachtet. So weisen durch Blähgraphit flammgeschützte Dämmplatten aus Polyurethan-Hartschaum auf der Unterseite (bezogen auf die Lage in der Doppeltransportbandanlage) erhöhte Gehalte an Blähgraphit auf, während die Oberseite an Blähgraphit verarmt ist.

EP-A-0554719 betrifft ein Verfahren zur Herstellung von Prepolymeren, bei dem die Einsatzstoffe vergleichsweise niedrigviskos sind. Entsprechend ist der in EP-A-0554719 offenbarte Mischkopf bzw. Reaktor für relativ geringe Druckunterschiede vorgesehen. Eine Lehre zur Herstellung füllstoffhaltiger Polyurethane, insbesondere unter Einsatz von mechanisch empfindlichen Füllstoffen, wird durch EP-A-0554719 nicht vermittelt.

EP-A-0431388 betrifft die Vermeidung des unerwünschten Eintrags von Luft bei der Vermischung von Füllstoffen mit der Polyol-Komponente. Als Mischaggregate für die Vermischung von Polyol und Füllstoff sowie der fullstofmaltigen Polyol-Komponente mit Isocyanat werden jeweils Rührwerksmischer eingesetzt, die im Zusammenhang mit mechanisch empfindlichen Füllstoffen zu einer unerwünschten Komgrößen-Verkleinerung führen.

Keine der genannten Druckschriften, die sich mit der Flanimfestausrüstung von Polyurethan-Schaum befaßt, gibt einen Hinweis zur schonenden Einarbeitung des Blähgraphits in den Schaum. Entsprechend konnte Blähgraphit sich bisher als Flammschutzmittel in Polyurethan-Dämmplatten nicht durchsetzen.

Die vorliegende Erfindung gibt einerseits ein Verfahren und entsprechende Vorrichtungen zur schonenden Einarbeitung von Blähgraphit in eine Polyurethan-Reaktivmischung und andererseits Verfahren und entsprechende Mittel zur Reduzierung bzw. Verhinderung der Sedimentation des Blähgraphits im Flüssigschaum an.

Die Erfindung ist jedoch nicht auf die Einarbeitung von Blähgraphit in Polyurethan beschränkt, sondern ist allgemein für die Einarbeitung mechanisch empfindlicher Füllstoffe in Polyurethane einsetzbar. Solche Füllstoffe sind beispielsweise Kurzglasfasern, die im allgemeinen bei der Einarbeitung brechen und damit einen Teil ihres Verstärkungspotentials verlieren.

Ein weiteres Beispiel ist die Einarbeitung von Eisenoxidpigmenten bei der Herstellung von Dämmstoffen zur Abschirmung elektromagnetischer Strahlung.

Gegenstand der vorliegenden Erfindung ist zum einen eine Vorrichtung zur Herstellung füllstoffhaltiger Polyurethane, enthaltend eine Dosiereinrichtung für den Füllstoff; eine Dosiereinrichtung für das Polyol; eine eine Vollblattschnecke aufweisende Mischschnecke zur Vermischung von Füllstoff und Polyol, wobei der Spalt zwischen Schnecke und Schneckengehäuse 1,5 bis 2,5 mm beträgt; einen drucklosen Zwischenspeicher für die füllstoffhaltige Polyol-Komponente; eine Schraubenspindel- bzw.Exzenterschneckenpumpe zur Förderung der Mischung zu einem Mischkopf zur Vermischung der füllstoffhaltigen Polyol-Komponente mit der Isocyanat-Komponente, wobei die Zuleitung der füllstoffhaltigen Polyol-Komponente zur Mischkammer, die Mischkammer selbst und die anschließende Leitung bis zum Gemischaustrag im wesentlichen den gleichen Durchmesser aufweisen, wobei die Mischkammer lediglich einen in ihrer Ausdehnung in Strömungsrichtung nicht scharf definierten Bereich darstellt, in den die eine oder mehrere Einleitöffnungen für die Isocyanat-Komponente münden, und wobei die Querschnittsfläche des Mischkopfes 10- bis 100-mal, vorzugsweise 30- bis 100-, insbesondere mindestens 50mal größer ist als die Summe der Querschnittsflächen der Einleitöffnung en für die Isocyanat-Komponente.

Erfindungsgemäß ist die Mischkammer frei von beweglichen oder unbeweglichen turbulenzerzeugenden Einbauten.

Vorzugsweise sind zwei bis vier Einleitöffnungen für die Isocyanatkomponente vorgesehen. Die Einleitöffnungen für die Isocyanatkomponente können in einer Ebene quer zur Durchströmrichtung der Mischkammer angeordnet sein. Im Falle, daß mehrere Einleitöffnungen für die Isocyanatkomponente vorgesehen sind, werden diese vorzugsweise jedoch in mehreren aufeinanderfolgenden Ebenen angeordnet.

Vorzugsweise beträgt der Druck der füllstoffhaltigen Polyolkomponente bei der Einleitung in die Mischkammer zwischen 0,2 und 2 bar, insbesondere bevorzugt zwischen 1 und 1,5 bar. Die Isocyanatkomponente kann vorteilhaft bei einem Druck zwischen 50 und 250 bar in die Mischkammer injiziert werden, vorzugsweise oberhalb 100 bar.

Die Geschwindigkeit der zuströmenden Polyolkomponente soll mindestens 1 m/s, vorzugsweise 2 bis 5 m/s, betragen. Die Strömungsgeschwindigkeit der Isocyanatkomponente beträgt vorzugsweise 80 bis 150 m/s.

Gegenstand der vorliegenden Erfindung ist auch das Verfahren nach Anspruch 1.

Die Herstellung der füllstoffhaltigen Polyolkomponente erfolgt vorzugsweise wie folgt:

Der Füllstoff wird über Dosierschnecken, Dosierbandwaagen oder Schüttelrinnen dosiert und einer Mischschnecke zur Vermischung mit dem Polyol zugeführt.

Die Steigung, Wandgängigkeit, Länge und Drehzahl werden vorzugsweise derart aufeinander abgestimmt, daß die Friktion und der Druckaufbau in der Schnecke minimiert werden. Eine bevorzugte Ausführungsform der Mischschnecke weist eine durchgehende Förderschnecke (Einblattschnecke) auf, die einen Spalt zum Schneckengehäuse frei läßt, der größer ist als die Korngröße des Füllstoffs. Vorzugsweise hat der Spalt die 2- bis 4fache Breite der mittleren Korngröße. Bei Einsatz eines Blähgraphits mit einer mittleren Korngröße von 0,6 bis 0,8 mm (Plättchendurchmesser) beträgt der Spalt zwischen Schnecke und Gehäuse bevorzugt 1,5 bis 2,5 mm. Die Steigung der Schnecke H/D (Hub einer Windung dividiert durch den Durchmesser) kann 0,8 bis 1,5 betragen. Die Rotationsgeschwindigkeit der Schnecke wird vorzugsweise so gewählt, daß die Scherung im Spalt zum Schneckengehäuse 30/s nicht übersteigt. Insbesondere soll die Scherung 10 bis 25/s betragen.

Aus der Mischschnecke wird die füllstoffhaltige Polyolkomponente einem Vorratstrichter zugeführt, der als saugseitige Vorlage für eine Dosierpumpe zur Förderung der füllstoffhaltigen Polyolkomponente zum Mischkopf dient. Als Dosierpumpen sind Schraubenspindel oder Exzenterschneckenpumpen, die im Niederdruckbereich bis 20 bar Pumpeninnendruck betrieben werden, d.h. im Drehzahlbereich von 300 bis 500 U/min, geeignet.

Zwischen Dosierpumpe und Mischkopf ist vorzugsweise eine Begasungseinrichtung vorgesehen, in der Luft und/oder Stickstoff in Mengen von 1 bis 30 Vol.-% (Normalbedingungen), bezogen auf Polyol, in die füllstoffhaltige Polyolkomponente eingebracht wird. Unter Berücksichtigung der im Polyol aufgrund der Lagerung bereits gelösten Luftmenge soll die im Polyol vorhandene Luftmenge nach der Begasung 10 bis 30 Vol.-% betragen. Vorzugsweise erfolgt die Begasung in einem Durchflußbehälter mittels Hohlrührer, insbesondere bevorzugt mittels Hohlkegelrührer. Bei dem herrschenden Druck wird das Gas vollständig gelöst. Nach Entspannung der Polyisocyanat-Polyadditionsreaktionsmischung hinter dem Mischkopf auf Normaldruck ist die Mischung an dem Gas übersättigt, so daß sich an den Füllstoffpartikeln als Bläschenkeime Gasblasen abscheiden, die einer Sedimentation des Füllstoffs in dem Polyurethan-Flüssigschaum entgegenwirken.

Bei der kontinuierlichen Herstellung von Polyurethan-Schaum wird die füllstoffhaltige Polyisocyanat-Polyadditionsreaktionsmischung vorzugsweise über Hohlkegel-, Zungen-, Löffel- oder Breitschlitzdüsen auf das untere Transportband einer Doppeltransportbandanlage aufgebracht. Besonders bevorzugt sind Zungendüsen, die unter der Bezeichnung Z1 bis Z4 von der Firma Lechler, Metzingen, Deutschland, erhältlich sind. Mittels solcher Düsen läßt sich ein breiter Flachstrahl mit scharf begrenztem Spritzbild erzeugen. Vorzugsweise ist der Flachstrahl parallel zur Bewegungsrichtung des Transportbandes ausgerichtet, wobei der Mischkopf mit der Austragsvorrichtung über die Breite des Transportbandes hin- und herbewegt wird.

Mit der vorliegenden Erfindung gelingt es, mechanisch empfindliche Füllstoffe, insbesondere expandierbaren Graphit, in Polyurethanen einzusetzen. Dabei werden die Füllstoffe auf dem Weg der Einarbeitung keinen Drücken ausgesetzt, die höher als 20 bar sind. Vorzugsweise werden Drücke von maximal 10 bar ausgeübt.

Die Erfindung wird nachfolgend anhand der beigefügten Figuren näher erläutert:
- Fig. 1a und 1b: zeigen einen Mischkopf mit einem als Breitschlitzdüse gestalteten Auslauf.
- Fig. 2: zeigt einen Mischkopf mit einem als Löffel- bzw. Zungendüse gestalteten Auslaß.
- Fig. 3a und 3b: zeigen einen Mischkopf für Schußbetrieb.
- Fig. 4a, 4b und 4c: zeigen eine alternative Ausfühhmgsform eines Mischkopfes für Schußbetrieb.
- Fig. 5: zeigt schematisch eine erfindungsgemäße Vorrichtung zur Herstellung von füllstofmaltigen Polyurethan-Dämmplatten.

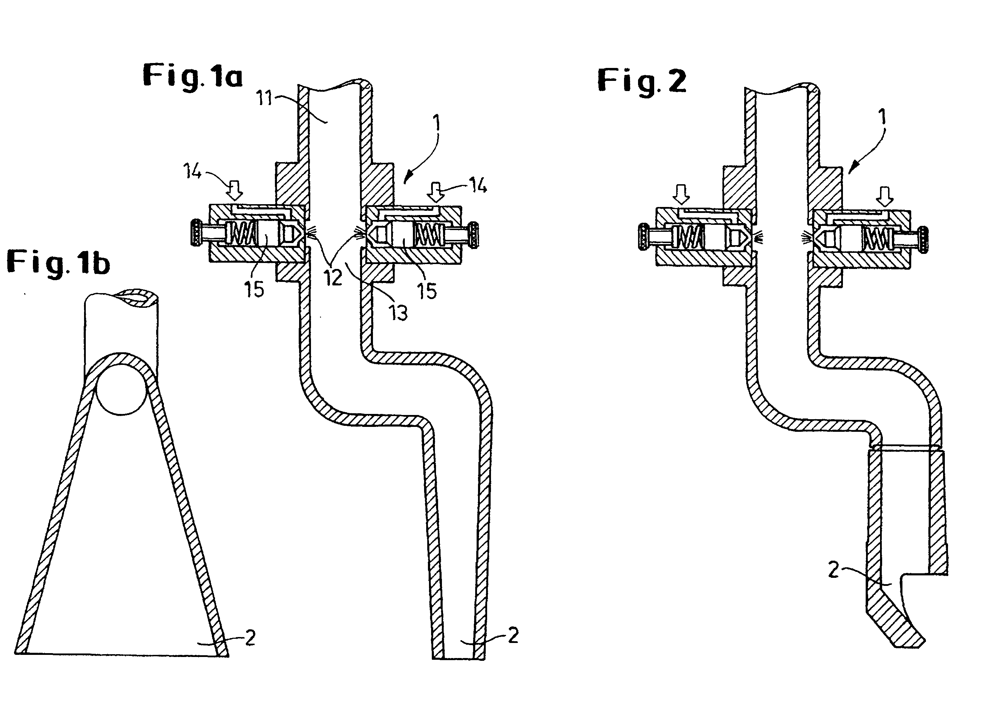

Der Mischkopf 1 gemäß Fig. 1a enthält eine Zuführleitung 11 für das füllstoffhaltige Polyol, sowie Einleitöffnungen 12 für das Isocyanat. Die Einleitöffnungen 12 weisen gegen vorgespannte Federn bewegliche Verschlußkegel 15 auf, die sich bei der Zuleitung von Isocyanat (Pfeil 14) mit dem erforderlichen Druck öffnen. Die geometrisch nicht scharf definierte Mischzone 13 ist in Form eines einfachen Durchflußrohres gestaltet, in das die Injektionsdüsen 12 für das Isocyanat münden. Die Mischzone 13 enthält keinerlei turbulenzerzeugende Einbauten. Vorzugsweise sind die Injektionsdüsen 12 für das Isocyanat nicht in Richtung auf die Achse der Mischzone 13 ausgerichtet, sondern derart in der Ebene senkrecht zur Achse verdreht, daß dem füllstoffhaltigen Polyolstrom durch die Injektion des Isocyanats eine Rotationsbewegung in der Mischzone 13 zur Unterstützung der Vermischung aufgeprägt wird. Der Auslauf 2 des Mischkopfes 1 ist in Form einer Breitschlitzdüse ausgestaltet. Fig. 1b zeigt einen Schnitt senkrecht zur Zeichnungsebene der Fig. 1a durch den Mischkopfauslauf 2.

Fig. 2 zeigt einen Mischkopf 1 wie in Fig. 1a, wobei jedoch der Auslauf 2 als Zungendüse ausgebildet ist.

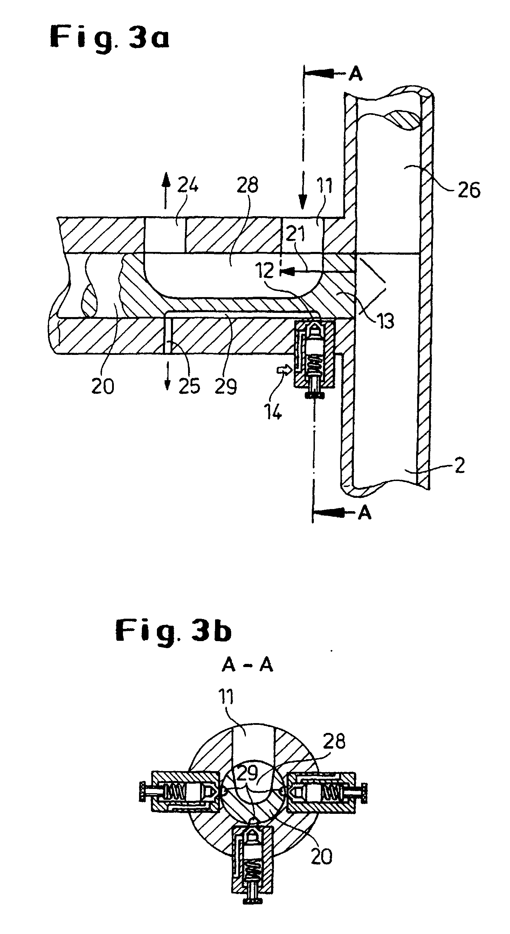

Der Mischkopf 1 gemäß Fig. 3a ist für den intermittierenden Schußbetrieb zur Herstellung von Formschaumteilen geeignet. Der Mischkopf weist einen Verschlußkolben 20 auf, der in Achsenrichtung (Pfeil 21) hydraulisch beweglich ist. Zur Füllung der Form wird der Verschlußkolben 20 (wie durch Pfeil 21 angedeutet) zurückgefahren, so daß der Zulauf 11 für das füllstoffhaltige Polyol und die Injektionsdüse 12 für das Isocyanat für den Eintritt in die Mischzone 13 freigegeben werden. Aus der Mischzone 13 gelangt die Mischung in das Auslaufrohr 2, durch das die Mischung in die Form gefüllt wird. Nach Beendigung der Formfüllung wird der Verschlußkolben 20 in die dargestellte Position zurückgefahren, wobei die Zulaufe 11 und 12 zur Mischzone 13 abgesperrt werden. Gleichzeitig werden die Zuläufe 11 und 12 über Nuten 28 und 29 des Verschlußkolbens 20 mit den Rezirkulationsleitungen 24 und 25 verbunden, über die das füllstoffhaltige Polyol und das Isocyanat in die jeweiligen Vorratsbehälter zurückgefördert werden. Der Rezirkulationsstrom wird während der Schußunterbrechung, wie in der Technik der Polyurethan-Herstellung üblich, aufrechterhalten. Der Mischkopf weist ferner einen hydraulisch betriebenen Reinigungskolben 26 auf, der nach Schußende, nachdem der Verschlußkolben 20 in Verschlußstellung gefahren ist, die im Auslaufrohr 2 verbliebene Mischung aus dem Auslaufrohr 2 auswirft. Fig. 3b zeigt einen Schnitt A-A durch die Darstellung der Fig. 3a. In der beispielhaften Darstellung sind drei Injektionsdüsen für die Isocyanat-Einleitung vorgesehen. Im übrigen sind Variationen der konstruktiven Ausführung des Mischkopfes möglich, die der Fachmann ohne weiteres aus Becker/Braun, Kunststoff-Handbuch, Band 7, Polyurethane, S. 177-182 (1993) ableiten kann. Erfmdungsgemäß wesentlich ist der im Vergleich zu den Isocyanat-Einleitöffnungen große Querschnitt der Zuleitung für das füllstoffhaltige Polyol mit entsprechend großen Querschnitten für die Rezirkulationsleitungen, so daß das füllstoffhaltige Polyol im wesentlichen druckfrei gefördert werden kann.

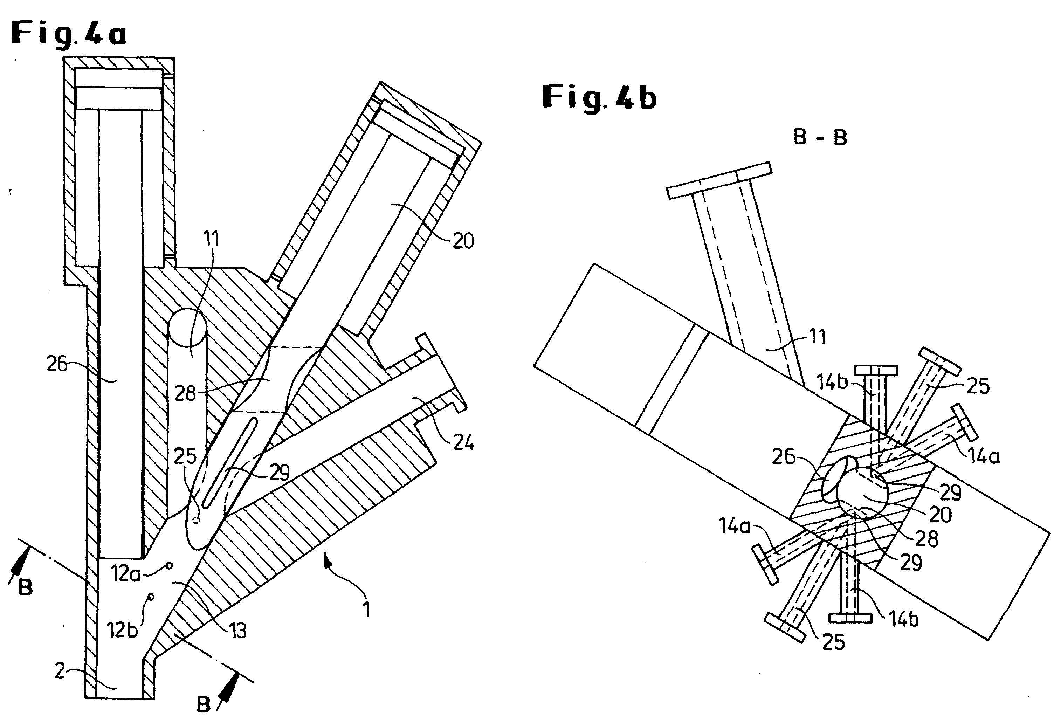

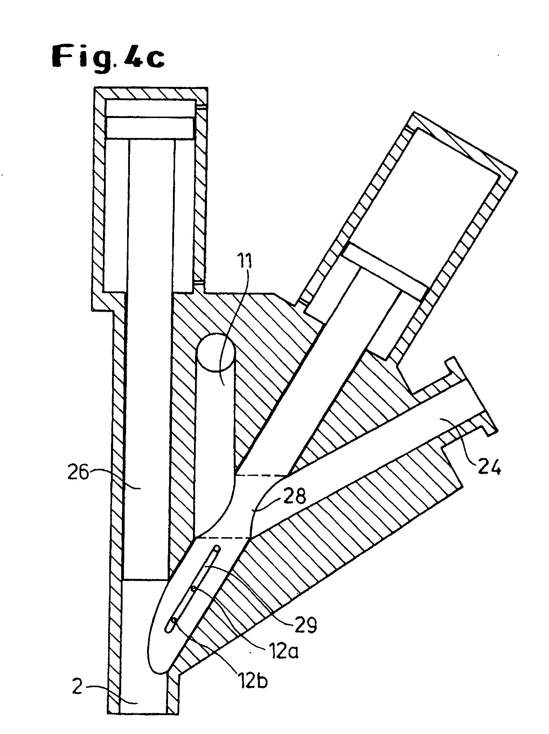

Fig. 4a zeigt eine alternative Ausführungsform für den erfindungsgemäßen Mischkopf für intermittierenden Schußbetrieb, wobei die Umlenkwinkel für das füllstoffhaltige Polyol klein gehalten werden. Gleiche Bezugszeichen bezeichnen gleiche Elemente wie in Fig. 3a. Fig. 4b zeigt einen Schnitt B-B durch die Darstellung der Fig. 4a. Fig. 4c zeigt eine Darstellung gemäß Fig. 4a, wobei der Verschlußkolben 20 in Verschlußstellung gefahren ist. Der über Zuleitung 11 zugeführte füllstoffhaltige Polyolstrom erfährt bei der Einleitung in die Mischzone 13 lediglich eine Umlenkung von 20 bis 35°. Die Einleitung des Isocyanats (vier paarweise gegenüberliegende Einleitöffnungen 12a und 12b) erfolgt quer zum Polyolstrom. Dabei sind die Isocyanat-Zuleitungen 14a und 14b paarweise derart versetzt, daß der Polyolstrom in den Einleitebenen gegenläufig in Rotation versetzt wird. Die Rezirkulation des Isocyanats nach Schußende erfolgt über Nuten 29 des Verschlußkolbens 20. Die Rezirkulation des füllstoffhaltigen Polyols erfolgt durch eine Bohrung 28 durch den Verschlußkolben 20, die in Verschlußstellung die Verbindung zur Rezirkulationsleitung 24 herstellt.

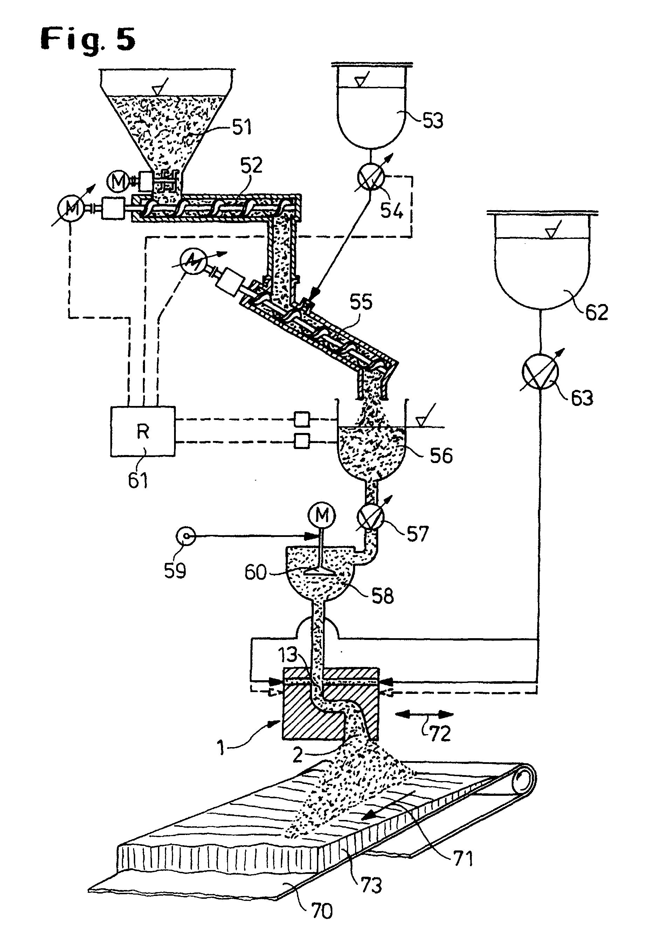

Fig. 5 zeigt schematisch das Verfahren zur schonenden Einarbeitung von Füllstoffen in Polyurethane. Der Füllstoff, insbesondere expandierbarer Graphit, wird aus einem Vorratstrichter 51 mittels einer Dosierschnecke 52 in die Mischschnecke 55 gefördert. Das Polyol wird aus dem Vorratsbehälter 53 über eine Dosierpumpe 54 ebenfalls in die Mischschnecke 55 gefördert. Aus der Mischschnecke 55 gelangt das füllstoffhaltige Polyol in den Vorratstrichter 56, wobei über die Niveausteuerung 61 das Vorratsvolumen an füllstoffhaltigem Polyol so bemessen wird, daß die Verweilzeit 8 bis 20 s nicht übersteigt. Durch die geringe Verweilzeit in dem Vorratstrichter 56 wird eine Sedimentation des Füllstoffs im Vorratstrichter vermieden. Mittels einer im niedrigtourigen Bereich betriebenen Schraubenspindelpumpe 57 wird das füllstoffhaltige Polyol in die Begasungseinrichtung 58 gefördert, die als Durchflußbehälter ausgebildet ist. Die Begasung erfolgt mittels eines Kegel-Hohlrührers 60, dem über seine Hohlachse Luft oder Stickstoff 59 zugeführt wird. Aus dem Begasungsbehälter 58 gelangt die gasbeladene, füllstoffhaltige Polyolkomponente in den Mischkopf 1. In der Mischzone 13 wird aus dem Vorratsbehälter 62 über die Dosierpumpe 63 unter Druck Isocyanat injiziert. Im Auslauf des Mischkopfes 2 wird ein breitgefächerter Strahl einer füllstoffhaltigen Polyisocyanat-Polyadditionsmischung erzeugt, der auf das in Richtung Pfeil 71 fördernde Transportband 70 einer Blockschaumanlage aufgebracht wird. Zur Querverteilung der Mischung über die Breite des Transportbandes wird der Mischkopf 1, wie durch Pfeil 72 angedeutet, hinund herbewegt. Beim Austritt aus dem Mischkopf 1 wird das in der Mischung gelöste Gas in Form feiner Bläschen an den Füllstoffteilchen freigesetzt, so daß die Füllstoffteilchen in dem entstehenden Flüssigschaum 73 nicht sedimentieren. Bei intermittierendem Betrieb des Mischkopfes (Mischkopf gemäß Fig. 3 und 4) zur Herstellung von Formteilen erfolgt die Rückführung des Isocyanats bei Schußunterbrechung in den Vorratsbehälter 62 und die Rückführung des füllstoffhaltigen Polyols in den Vorratstrichter 56.

### Beispiel

Als A-Komponente dient eine Mischung aus 85 Teilen einer Polyolformulierung mit einer Viskosität von ca. 2000 mPa.s (25°C) und einer Hydroxylzahl von 590 mg KOH/g, erhältlich unter der Bezeichnung Baymer VP.PU 22HB96 der Bayer AG, Leverkusen, 15 Teilen Tris(chlorisopropyl)phosphat (TCPP), 2 Teilen eines Stabilisators, erhältlich unter der Bezeichnung Tegostab B8421 der Goldschmidt AG, Essen, 1,6 Teilen Aktivator, erhältlich unter der Bezeichnung Demorapid 726b der Bayer AG, Leverkusen, und 2,0 Teilen Wasser. Die A-Komponente wird in der Mischschnecke mit 25 Gew.-Teilen Blähgraphit, erhältlich unter dem Handelsnamen Sigraflex® FR der Firma SGL Carbon vermischt. In die Mischung werden im Begasungsbehälter 10 Vol.-Teile Luft eingebracht. Im Mischkopf wird eine Mischung aus 160 Gew.-Teilen Polyisocyanat, erhältlich unter der Bezeichnung Desmodur 44V70L der Bayer AG und 8 Gew.-Teilen n-Pentan injiziert (Mengenangaben jeweils pro Zeiteinheit). In einer Doppeltransportbandanlage wird eine Dämmplatte von 10 cm Dicke und einer Rohdichte von 34 kg/m³ erzeugt. Der Blähgraphit ist gleichmäßig über die Dicke der Platte verteilt. Der Brandtest nach DIN 4102, Teil 1, wird erfüllt. Die Dämmplatte erfüllt die Anforderungen der Baustoffklasse B2.

## Patentansprüche

1. Verfahren zur Herstellung füllstoffhaltiger Polyurethane, wobei die Polyol-Komponente in einer eine Vollblattschnecke aufweisenden Mischschnecke, wobei der Spalt zwischen Schnecke und Schneckengehäuse die 2- bis 4-fache Breite der mittleren Korngröße des Füllstoffs aufweist, mit dem Füllstoff vorvermischt wird; die Mischung mittels Schraubenspindelpumpe oder Exzenterschneckenpumpe zu einem Mischkopf gefördert wird, wobei der Pumpeninnendruck 20 bar nicht übersteigt und der Druck der Mischung bei der Einleitung in den Mischkopf 2 bar nicht übersteigt; das Isocyanat mit einem Druck von 50 bis 250 bar in die füllstoffhaltige Polyol-Komponente injiziert wird und die Polyisocyanat-Polyadditionsmischung in eine kontinuierliche oder diskontinuierliche Form eingebracht und ausgehärtet wird.

2. Verfahren nach Anspruch 1 **dadurch gekennzeichnet, dass** als Füllstoff Blähgraphit eingesetzt wird.

3. Verfahren nach Anspruch 1 oder 2, **dadurch gekennzeichnet, dass** das füllstoffhaltige Polyol in einem drucklosen Zwischenbehälter für eine Verweilzeit von nicht mehr als 20 Sekunden zwischengespeichert wird.

4. Verfahren nach einem der Ansprüche 1 bis 3, **dadurch gekennzeichnet, dass** in der füllstoffhaltigen Polyolkomponente 1 bis 30 Vol.-% Luft und/oder Stickstoff eingebracht werden.

5. Vorrichtung zur Herstellung füllstoffhaitiger Polyurethane, enthaltend eine Dosiereinrichtung für den Füllstoff; eine Dosiereinrichtung für das Polyol; eine eine Vollblattschnecke aufweisende Mischschnecke zur Vermischung von Füllstoff und Polyol, wobei der Spalt zwischen Schnecke und Schneckengehäuse 1,5 bis 2,5 mm beträgt; einen drucklosen Zwischenspeicher für die füllstoffhaltige Polyol-Komponente; eine Schraubenspindel- bzw. Exzenterschneckenpumpe zur Förderung der Mischung zu einem Mischkopf zur Vermischung der füllstoffhaltigen Polyol-Komponente mit der Isocyanat-Komponente, wobei die Zuleitung der füllstoffhaltigen Polyol-Komponente zur Mischkammer, die Mischkammer selbst und die anschließende Leitung bis zum Gemischaustrag im wesentlichen den gleichen Durchmesser aufweisen, wobei die Mischkammer lediglich einen in ihrer Ausdehnung in Strömungsrichtung nicht scharf definierten Bereich darstellt, in den die eine oder mehrere Einleitöffnungen für die Isocyanat-Komponente münden, und wobei die Querschnittsfläche des Mischkopfes 10- bis 100-mal größer ist als die Summe der Querschnittsflächen der Einleitöffnungen für die Isocyanat-Komponente.

6. Vorrichtung nach Anspruch 5, wobei die Querschnittsfläche des Mischkopfes 30- bis 100-mal größer ist als die Summe der Querschnittsflächen der Einleitöffnungen für die Isocyanat-Komponente.

## Claims

1. Process for the production of polyurethanes containing filling material, wherein the polyol component is premixed with the filling material in a mixing screw having a full blade screw, the width of the gap between the screw and the screw housing being from 2 to 4 times the mean particle size of the filling material; the mixture is conveyed by means of a screw pump or an eccentric screw pump to a mixing head, the internal pump pressure not exceeding 20 bar and the pressure of the mixture on introduction into the mixing head not exceeding 2 bar; the isocyanate is injected at a pressure of from 50 to 250 bar into the polyol component containing filling material, and the polyisocyanate polyaddition mixture is introduced into a continuous or discontinuous mould and is cured.

2. Process according to claim 1, **characterised in that** expanded graphite is used as the filling material.

3. Process according to claim 1 or 2, **characterised in that** the polyol containing filling material is stored intermediately in a pressure-free intermediate container for a dwell time of not more than 20 seconds.

4. Process according to any one of claims 1 to 3, **characterised in that** from 1 to 30 vol.% of air and/or nitrogen is introduced into the polyol component containing filling material.

5. Device for producing polyurethanes containing filling material, containing a metering device for the filling material; a metering device for the polyol; a mixing screw having a full blade screw for mixing the filling material and the polyol, the gap between the screw and the screw housing being from 1.5 to 2.5 mm; a pressure-free intermediate storage container for the polyol component containing filling material; a screw pump or eccentric screw pump for conveying the mixture to a mixing head for mixing the polyol component containing filling material with the isocyanate component, wherein the pipe supplying the polyol component containing filling material to the mixing chamber, the mixing chamber itself and the subsequent pipe to the mixture outlet have substantially the same diameter, the mixing chamber simply being a region which is not sharply defined in its extent in the direction of flow, into which the one or more inlet openings for the isocyanate component open, and wherein the cross-sectional area of the mixing head is from 10 to 100 times greater than the sum of the cross-sectional areas of the inlet openings for the isocyanate component.

6. Device according to claim 5, wherein the cross-sectional area of the mixing head is from 30 to 100 times greater than the sum of the cross-sectional areas of the inlet openings for the isocyanate component.

## Revendications

1. Procédé pour la préparation de polyuréthanes contenant des charges, dans lequel le composant polyol est pré-mélangé avec la charge dans une vis de mélange présentant une vis à volute continue, l'interstice entre la vis et le boîtier de la vis présentant de 2 à 4 fois la largeur de la taille moyenne des particules de la charge, le mélange étant transporté au moyen d'une pompe à broche hélicoïdale ou une pompe à vis excentrée vers une tête de mélange, la pression intérieure de la pompe ne dépassant pas 20 bars et la pression du mélange lors de son introduction dans la tête de mélange ne dépassant pas 2 bars, l'isocyanate étant injecté sous une pression de 50 à 250 bars dans le composant polyol contenant la charge et le mélange de polyisocyanate et polyaddition étant amené et durci dans un moule continu ou discontinu.

2. Procédé selon la revendication 1, **caractérisé en ce que** comme charge, on utilise du graphite soufflé.

3. Procédé selon la revendication 1 ou 2, **caractérisé en ce que** le polyol contenant la charge est stocké de manière intermédiaire dans un récipient intermédiaire non sous pression, pendant un temps de séjour non supérieur à 20 secondes.

4. Procédé selon l'une des revendications 1 à 3, **caractérisé en ce que** l'on amène de 1 à 30 % en volume d'air ou d'azote dans le composant polyol contenant la charge.

5. Dispositif pour la préparation de polyuréthanes contenant une charge, présentant un dispositif de dosage de la charge; un dispositif de dosage du polyol; une vis de mélange présentant une volute continue pour le mélange de la charge et du polyol, l'interstice entre la vis et le boîtier de la vis étant compris entre 1, 5 et 2,5 mm; un réservoir intermédiaire non sous pression pour le composant polyol contenant la charge; une pompe à broche hélicoïdale ou à vis excentrique pour le transport du mélange vers une tête de mélange, pour mélanger le composant polyol contenant la charge avec le composant isocyanate, l'amenée du composant polyol contenant la charge vers la chambre de mélange, la chambre de mélange proprement dite et le conduit qui s'y raccorde pour la relier à la sortie du mélange présentant essentiellement le même diamètre, la chambre de mélange représentant uniquement par son extension dans la direction d'écoulement une zone non nettement définie dans laquelle débouchent une ou plusieurs ouvertures pour le composant isocyanate, la surface de la section transversale de la tête de mélange étant 10 à 100 fois plus grande que la somme des surfaces des sections transversales des ouvertures d'introduction du composant isocyanate.

6. Dispositif selon la revendication 5, dans lequel la surface de la section transversale de la tête de mélange est 30 à 100 fois plus grande que la somme des surfaces de sections transversales des ouvertures d'introduction du composant isocyanate.
